(19)

**Europäisches Patentamt**

**European Patent Office**

**Office européen des brevets**

(11) **EP 4 685 525 A1**

(12) **EUROPEAN PATENT APPLICATION**

(43) Date of publication:
**28.01.2026 Bulletin 2026/05**

(21) Application number: **24189983.0**

(22) Date of filing: **22.07.2024**

(51) International Patent Classification (IPC):
**G01S 19/37** $^{(2010.01)}$ **G01S 19/42** $^{(2010.01)}$

(52) Cooperative Patent Classification (CPC):
**G01S 19/37;** G01S 19/42

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **u-blox AG**
**8800 Thalwil (CH)**

(72) Inventor: **Gallardo, Alvaro**
**8800 Thalwil (CH)**

(74) Representative: **Epping - Hermann - Fischer
Patentanwaltsgesellschaft mbH
Schloßschmidstraße 5
80639 München (DE)**

(54) **RESOURCE MANAGEMENT METHOD FOR A GNSS RECEIVER AND A CORRESPONDING GNSS RECEIVER**

(57) The present disclosure relates to a resource management method for a GNSS receiver (10), comprising: determining an epoch (E) for an application (15) of the GNSS receiver (10), wherein the epoch (E) defines a first time period t2 in which the application (15) expects to receive positioning data; determining a number of repetitions n for performing one or more repetitive tasks of a positioning algorithm (14) of the GNSS receiver (10); and during each epoch, performing the positioning algorithm (14). Performing the positioning algorithm (14) comprises: performing the one or more repetitive tasks of the positioning algorithm n times, wherein performing the one or more repetitive tasks n times takes a first amount of running time t3 that depends on the number n of repetitions; performing one or more non-repetitive tasks of the positioning algorithm (14), wherein performing the one or more non-repetitive tasks takes a second amount of running time t5 that does not depend on the number n of repetitions; and outputting updated positioning data to the application (15) based on the output of the one or more repetitive tasks and the one or more non-repetitive tasks of the positioning algorithm (14). The number n of repetitions is determined such that $t3 + t5 \leq t2$.

The present disclosure further relates to a GNSS receiver (10) configured to perform the above method.

Fig. 2

## Description

The present invention relates to a resource management method for a global navigation satellite system (GNSS) and a corresponding GNSS receiver configured to perform the resource management method.

A number of satellite-based navigation systems are currently in use. Examples include the US-based Global Positioning System (GPS), Russia's Global Navigation Satellite System (GLONASS), China's BeiDou Navigation Satellite System (BDS) and the Galileo system of the European Union. In addition, a number of further satellite-based navigation systems, global, regional and national, are operating or under development.

Satellite-based navigation systems enable to determine a position of a GNSS receiver based on propagation time delays of satellite signals received from satellites of one or more satellite constellations located at known locations in an orbit. The precision of the determined position of the GNSS receiver generally depends on various parameters of the received signals used for positioning. Among others, the signals encode information on a position of the respective satellite and a point-in-time at which the signal was transmitted by the respective satellite. The encoded information themselves as well as the radio frequency (RF) signals used for the transmission are subject to errors. Generally speaking, the precision of the computed position will increase, the more satellite signals are considered by the GNSS receiver. However, acquiring, tracking, decoding and/or processing a large number of satellite signals also leads to a high demand on processing resources of the GNSS receiver. Accordingly, there is a general need for managing resources of a GNSS receiver.

US 8,164,519 B1 discloses a method of fast acquisition of a location of a device. The method generally includes the steps of (A) repeatedly powering up automatically (i) a radio receiver and (ii) a given subset of a plurality of correlators in some of a plurality of search engines in the device, (B) buffering first data of a plurality of positioning signals received through the radio receiver over a first period, each of the position signals comprising a respective one of a plurality of code sequences, (C) searching through the first data with the correlators to find at least one of the code sequences, each of the correlators using a search window comprising a fraction of a code length of the code sequences and (D) generating an output signal carrying a location of the device based on the position signals corresponding to the code sequences that were found.

The fast acquisition method disclosed therein may be used in support of an always-on operation of a GPS receiver, even in battery operated, handheld equipment such as cellular telephones, digital picture cameras and digital video cameras, where power consumption is at a premium.

While the fast acquisition method according to the prior art is particularly useful in such low power applications, it does not provide positioning data at a predetermined time and is therefore not suitable for certain types of applications, including GNSS applications actively requesting or expecting to receive updated positioning data at a given sampling rate. Accordingly, the present invention provides an improved resource management method for a GNSS receiver, which can be adapted in a flexible manner to the requirements of different applications and/or available processing resources, such as CPU power of a GNSS receiver.

In this context, the present disclosure provides a resource management method for a GNSS receiver, comprising: determining an epoch for an application of the GNSS receiver, wherein the epoch defines a first time period t2 in which the application expects to receive positioning data; determining a number n of repetitions for performing one or more repetitive tasks of a positioning algorithm of the GNSS receiver; and during each epoch, performing the positioning algorithm. Performing the positioning algorithm comprises: performing the one or more repetitive tasks of the positioning algorithm n times, wherein performing the one or more repetitive tasks n times takes a first amount of running time t3 that depends on the number n of repetitions; performing one or more non-repetitive tasks of the positioning algorithm, wherein performing the one or more non-repetitive tasks takes a second amount of running time t5 that does not depend on the number n of repetitions; and outputting updated positioning data to the application based on the output of the one or more repetitive tasks and the one or more non-repetitive tasks of the positioning algorithm. The number n of repetitions is determined such that the sum of the first amount of running time t3 and the second amount of running time t5 is equal to or shorter than the first time period t2.

Among others, the inventors have found that the resource consumption of a positioning algorithm can be modelled based on a separation of tasks into one or more non-repetitive tasks, and one or more repetitive (or iterative) tasks. Moreover, by determining a number of repetitions for performing the one or more repetitive tasks of the positioning algorithm, the overall response time and, hence, output rate at which updated positioning data can be provided to an application, can be controlled. While, in general, a higher number of repetitions leads to a better precision of the output positioning data, the resource management method according to the present disclosure ensures that the time required to perform the positioning algorithm does not exceed a first time period t2, in which the application expects to receive updated positioning data. Consequently, updated positioning data is output to the application before an end of each epoch or measurement interval of the application.

Optionally, the one or more repetitive tasks are performed in an iterative manner for a maximum of n GNSS signals from a set of available GNSS signals, and the maximum number of n GNSS signals to be considered is based on the difference between the first time period t2 and the second amount of running time t5. In particular, the disclosed method may make use of the observation that the time required to perform the non-repetitive task is essentially fixed, at least for each epoch, and therefore is not available for performing repetitions of the one or more repetitive tasks.

Alternative, the one or more repetitive tasks is performed in a recursive manner, with a recursive depth corresponding to n. For example, a recursive algorithm may be performed, which each recursion corresponding to a repetitive task. The recursion may be stopped, when the recursion depth reaches the n-th level, making sure that at most n iterations of the repetitive task are performed. Of course, if another stopping condition for the recursive algorithm is met, e.g., a predefined convergence criterion, the recursive algorithm may stop before the maximum recursion depth of n is reached.

Optionally, each repetition of the one or more repetitive task takes an essentially fixed third amount of running time t4, such that $t3 = n \cdot t4$, and the number n of repetitions is selected from a range $[n_{min}, n_{max}]$, wherein $n_{min}$ is a predefined minimum number of repetitions, in particular $n_{min}= 4$, and $n_{max}$ is a maximum number of repetitions computed as $n_{max} = \left\lfloor \frac{t2-t5}{t4} \right\rfloor$, and $\lfloor \rfloor$ is an operation for rounding down to the nearest integer number. In case the one or more repetitive tasks scale essentially linearly with the number of repetitions, the disclosed method may determine the maximum number of iterations allowable for a given sampling frequency based on the above mathematical relationship. The predefined lower threshold $n_{min}$, may be selected based on computational requirements of the position algorithm. For example, in case each iteration corresponds to a processed signal, the minimum number of repetitions $n_{min}$ is 4 as at least four satellite signals are required to calculate a position. E.g., the time t4 is or comprises the time period to measure a pseudorange of a respective satellite signal. In case that n is smaller than $n_{max}$, although the position accuracy might suffer, the power consumption of the disclosed method can be reduced.

Optionally, the number n of repetitions is determined to correspond to the maximum number $n_{max}$ of repetitions. In this case, the time available is used to the extent possible, i.e., the maximum number of repetitions and/or signals that can be processed within a given epoch time are actually processed, thereby optimizing the precision of the positioning algorithm without endangering an update rate of the application.

Optionally, the one or more repetitive tasks comprises at least one of tracking a GNSS signal and decoding transmitted data of a GNSS signal. Tracking of a GNSS signal and/or decoding its content generally takes a fixed amount of time per considered GNSS satellite signal. While including further GNSS signals generally helps to improve the position of the determined positioning signal, in case the available computing time is limited, it may be beneficial to avoid tracking or decoding a large number of GNSS signals.

Optionally, the one or more non-repetitive tasks comprise at least one of sensor handling or message generation. Since these tasks are required to get positioning data for any GNSS application, they should be performed in each epoch.

Optionally, in each repetition of the one or more repetitive tasks, input data from an entry of an ordered list of potential input data is processed, such that only the first n entries of the ordered list are processed during an epoch (E). In particular, in case not all available input data can be processed within the computing time corresponding to a present epoch, it is beneficial to process more relevant input data first, e.g., data corresponding to satellite signals with good properties. Hence, positioning data of high precision is output, compared to positioning data based on input data with lower grade properties.

The ordering may be based on a predetermined or adaptive limit is set, or, alternatively, merely an amount of the signals to be considered is chosen, e.g., the eight best satellite signals. In this way, desired navigation and update output rate requirements can be fulfilled, while minimizing the negative impact of dropping some of the available input data.

Optionally, the list of potential input data is ordered based on at least one of an elevation, a carrier-to-noise density (C/N), a signal-to-noise ratio (SNR), a signal loss count, and a dilution of precision (DOP) of a corresponding GNSS signal. The above decision criteria, alone or in combination, enable the GNSS receiver to output updated positioning data with a relatively low error rate even on a limited number of considered GNSS signals.

Optionally, the second amount of running time t5 varies in a predetermined manner, for example, in a first type of epoch, a first number $N1$ of non-repetitive tasks of the positioning algorithm is performed, and, in a second type of epoch, a second number N2 of non-repetitive tasks of the positioning algorithm is performed, with $N1 > N2$. Accordingly, the second amount of running time t5 for the first type of epoch is longer than the second amount of running time t5 for the second type of epoch. Such a situation may arise, for example, when certain regular tasks need to be performed at intervals different from, and typically longer than, the first time period t2, in which the application expects to receive positioning data.

Optionally, after each repetition of one of the one or more repetitive tasks, a current processing time is compared with a cut-off time and, if an expected time period t4 for performing a further repetition of the one repetitive task exceeds the difference between the current processing time and the cut-off time, the repetitive task is stopped. In this manner, a relatively simple dynamic scheduling for the one or more repetitive tasks may be implemented, i.e., a scheduling approach, in which n is only determined at run-time of the positioning algorithm.

Optionally, the number n of repetitions is determined dynamically during a normal operation phase of the GNSS receiver, e.g., in a phase where the positioning algorithm has been initialized and is providing positioning data to one or more applications. In this case, the method may comprise: measuring at least one of the first amount of running time t3, the second amount of running time t5, and a third amount of running time t4 taken by performing one repetition of the one or more repetitive tasks in at least one earlier epoch; and determining the number n of repetitions for a present epoch based on at least one of the measured first amount of running time t3, the measured second amount of running time t5, the measured third amount of running time t4 and a number n of repetitions performed in the at least one earlier epoch. By keeping track of the various running times and/or number of repetitions of the one or more repetitive tasks in one or more earlier epochs, the disclosed method may provide a reliable estimate of how many repetitions n can be performed in a current epoch without exceeding the first time period t2, in which the application expects to receive positioning data.

Alternatively, the number n of repetitions may be determined statically or semi-statically before or during an initialization of the positioning algorithm, respectively, based on a worst-case estimate for the first amount of running time t3 and/or the second amount of running time t5 during a normal operation phase of the GNSS receiver. For example, for example based on knowledge of a processing power of a GNSS receiver, a maximum number of repetitions may be determined statically, and the positioning algorithm may be hard-coded or otherwise configured with the maximum number of repetitions at design time. Alternatively, or in addition, for example based on knowledge of a current processing load of a processor of the GNSS receiver or a sampling rate of a specific application, the maximum number of repetitions may be determined semi-statically during an initialization of the positioning algorithm or during a re-initialization of the positioning algorithm when the processing load or sampling rate changes.

Optionally, in each epoch at least one of the one or more repetitive tasks is performed before at least one of the one or more non-repetitive tasks; and/or at least one of the one or more repetitive tasks is performed after at least one of the one or more non-repetitive tasks. Based on the order in which the respective tasks are performed by the positioning algorithm, the determination of the number n of repetitions can be adapted accordingly, e.g., based on an estimation or hindsight.

The present disclosure further provides a GNSS receiver comprising a processing unit, wherein the processing unit is configured to perform any of the methods disclosed above.

Optionally, the positioning algorithm is configured to determine the number n of repetitions based on the current workload of the processing unit. In particular, in a multiprocessing environment, the workload of the processing unit may depend on other applications than the positioning algorithm itself, if they are performed by the same processing unit. In such a situation, the GNSS receiver can react flexibly to the current workload by increasing or decreasing the number of repetitions for performing the one or more repetitive tasks.

Optionally, the processing unit is further configured to perform the application, which is configured to process the positioning data output by the positioning algorithm. In this case, the available processing power of the GNSS receiver can be shared by the positioning algorithm and the corresponding application, without exceeding the first time period t2, in which the application expects to receive updated positioning data.

In the following, various embodiments of the present disclosure are described with respect to the attached figures. For easier reference, corresponding reference symbols and variable names are used with respect to different embodiments. In particular, the respective times taken by various parts of the positioning algorithm are consistently indicated using the same variable names $t1$ to $t5$ described below. This does not imply, however, that the respective tasks, components, and processing times are identical in each described embodiment.

Figure 1 shows a timing diagram of GNSS receiver performing repetitive tasks irrespective of a given sampling rate of an application.

Figure 2 shows a timing diagram of a GNSS receiver performing a non-repetitive task followed by a number of repetitive tasks.

Figure 3 shows a timing diagram of a GNSS receiver performing a number of repetitive tasks followed by a non-repetitive task.

Figure 4 shows an embodiment of a GNSS receiver performing a sequence of different repetitive and non-repetitive tasks.

Figure 5 shows an embodiment of a GNSS receiver performing the same number of repetitions of a repetitive task prior to one or two non-repetitive tasks in two different types of epochs.

Figure 6 shows an embodiment of a GNSS receiver performing a variable number of repetitions of a repetitive task prior to one or two non-repetitive tasks in two different types of epochs.

Figure 7 shows, in a schematic manner, a GNSS receiver configured to perform a resource management method.

Fig. 8 shows, in form of a block diagram, a specific process for initializing and running a positioning algorithm.

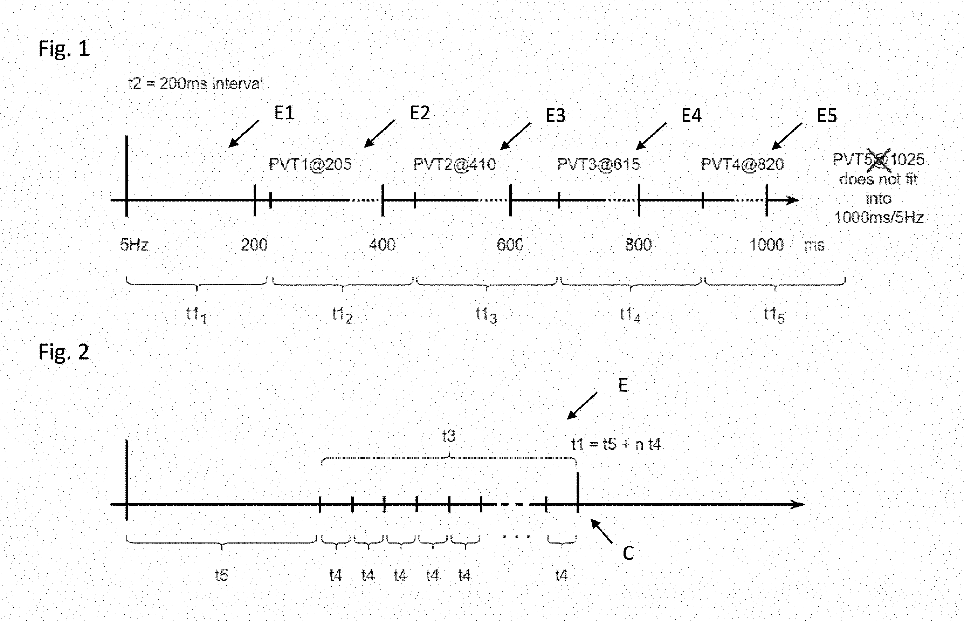

Figure 1 shows a timing diagram of a GNSS receiver, which either processes a fixed number of GNSS signals or a maximum of GNSS signals available in a current operating state. For example, the receiver according to Figure 1 may process a total of ten GNSS signals.

As indicated in Figure 1, acquiring, tracking and decoding of the ten GNSS signals as well as computing a solution for generating first positioning data in a current state of the GNSS receiver may take a total first time period $t1_1$ of approximately 205 ms. Thereafter, the process is repeated, which each further update of the positioning data taking a period of $t1_2$, $t1_3$, $t1_4$, $t1_5$, ... In the depicted examples, each of the processing times $t1_1$, ..., $t1_5$, is approximately 205 ms long. As indicated in Figure 1, accordingly, the first positioning data PVT1 is available at $t1_1$ at 205 ms, the second positioning data PVT2 is available at 410 ms, and so on.

In the described example, an application consuming the positioning data actively requests or expects to receive updated positioning data with a sampling rate r of 5 Hz corresponding to a second time period $t2 = 1/r = 200$ ms. The second time period t2 is also referred to as an epoch in this disclosure. The epoch time describes an interval at which updated positing data, corresponding to a Position Velocity Time (PVT) solution of the positioning algorithm, are requested by the application. Five epochs E1 to E5 are indicated in Figure 1. In case the total time period $t1$ it takes the GNSS receiver to compute a solution for providing the position data is higher than the expected time period t2 of the epochs E1 to E5, the application may not receive any positioning data in time and skip an epoch, so that an effective navigation or update rate of the application is reduced compared to the sampling rate. This is true even if a CPU usage threshold leading to the relative slow total processing time t1 is only marginally exceeded as indicated in the example shown in Figure 1 for the fifth positioning data PVT5.

To avoid the above-mentioned situation and associated disadvantages, the disclosed resource management method keeps track of the various contributions towards the total processing time $t1$, i.e., the various time intervals of tasks it takes the GNSS receiver to compute the solution for providing updated positioning data. This is described in more detail with respect to Figures 2 to 6 below.

Therein, the following variables are used to designate the respective time intervals:

$t1$: the total processing time required by a processing algorithm to output updated positioning data to an application,

$t2$: the time period, in which the application expects to receive updated positioning data,

$t3$: a sum of the processing time required for performing all scheduled repetitions of repetitive tasks,

$t4$: a processing time for performing an individual repetition of one or more repetitive tasks, and

$t5$: a sum of the processing time required to perform one or more non-repetitive tasks.

Figure 2 shows a first timing diagram of a GNSS receiver performing a method for resource management according to a first embodiment of the present disclosure.

As can be seen in Figure 2, a positioning algorithm designed for computing a solution for providing updated positioning data performs a number of tasks, with different timing behaviors. In particular, in a first time period t5, one task is performed, which is performed only once per epoch E and has an almost constant demand for processing power or CPU time. Typically, the first time period t5 is shorter than the time period $t2$. Thereafter, in a second time period $t3$, another task is performed in a repetitive manner, wherein each repetition takes a more or less constant time period $t4$. Accordingly, the time period t3 it takes to compute a certain number of repetitions of the repetitive task scales almost linearly with the number of the repetitions. Accordingly, the total processing time can be determined, at least approximately, as $t1 = t5 + n \cdot t4$.

The number n of repetitions a GNSS receiver performs a certain task, like signal tracking or signal decoding, is not constant, but varies, for example, with the number of GNSS signals considered by the algorithm. As another example, calculations of the positioning algorithm associated with pseudorange measurements may also be performed in a repetitive, e.g., iterative or recursive, manner. While a higher number of iterations and, hence, GNSS signals or pseudorange measurements considered by the positioning algorithm usually brings about a higher precision, it may also cause a degradation in the effective navigation or update rate of the application as detailed above. According to the embodiment shown in Figure 2, the number n is thus chosen such that the sum of the processing period t3 and t5 does not exceed the epoch time $t2$ of a specific application. That is to say, n is chosen such that $t2 \geq t5 + n \cdot t4$.

In the example shown in Figure 2, this may be implemented, for example, by first measuring the time t5 it takes the position algorithm to perform the non-repetitive task. Thereafter, a scheduling component or the position algorithm itself may measure the time t4 it takes to perform one or a small number of iterations of the repetitive task. Then, after completion of each iteration, the scheduling component or the position algorithm may compare the remaining time difference between a current processing time and the end of the time t2, i.e., a cut-off time C, to determine if another iteration can be performed by the position algorithm.

Accordingly, the algorithm can ensure that the total processing time $t1$ for each measurement does not exceed the available epoch time $t2$.

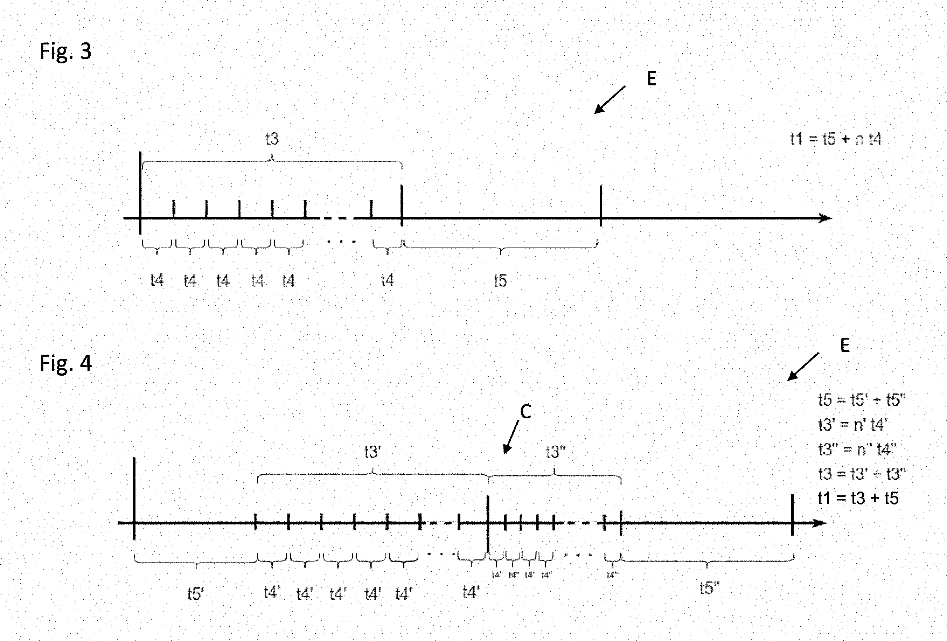

Figure 3 shows a second timing diagram of a GNSS receiver performing a method for resource management according to a second embodiment of the present disclosure.

In the embodiment shown in Figure 3, during each epoch time t2, at first a number of repetitions of a repetitive task are performed in a first time period $t3$, each repetition taking a relatively short time period $t4$. Thereafter, one non-repetitive task is performed in a second time period t5. As in the previous embodiment, the total time t1 it takes to compute updated position data is computed as $t1 = t5 + n \cdot t4$. However, in this case, since the time period t5 required for performing the non-repetitive task for a current epoch E is not known during the first interval $t3$, said time period $t5$ must be determined in another way to correctly determine the number of repetitions $n$. For example, $t5$ may be derived from analyzing one or more previous epochs and measuring the corresponding second time periods $t5$ there. That is to say, the value of $t5$ needs to be determined, i.e., predicted, before or at a start of the current epoch E of the positioning algorithm.

Figure 4 shows a third timing diagram of a GNSS receiver performing a method for resource management according to a more complex, third embodiment of the present disclosure.

According to the embodiment of Figure 4, a positioning algorithm performs at least two different non-repetitive tasks and two different repetitive tasks in each processing interval. In particular, the positioning algorithm starts by performing a first non-repetitive task in a first time period $t5'$. Thereafter, the positioning algorithm performs a first number $n'$ of iterations of a first repetitive tasks in a second time period $t3'$. Each of the repetitions of the first repetitive task takes an essentially fixed first processing time $t4'$. Thereafter, in a third time period t3", a second number $n''$ of repetitions of a second task is performed. Each repetition of the second task takes an essentially fixed second processing time $t4''$. Finally, a second non-repetitive task is performed in a fourth time period $t4''$.

As can be seen in Figure 4, the length of the first time period $t5'$ does not necessarily correspond to the length of the fourth time period $t5''$, and the time period required to perform each iteration of the first repetitive task $t4'$ does not necessarily correspond to the time period $t4''$ it takes to perform an iteration of the second task. The timing relationships of the various processing times are indicated in Figure 2.

It is important to note that the first number of repetitions $n''$ and the second number of repetitions $n''$ can, in principle, be determined independently of each other to optimize the output precision of the positioning algorithm. However, in a specific embodiment, the second number of repetitions $n''$ may not be completely independent of the first number of repetitions $n'$. For example, if the first repetitive task relates to a tracking of a corresponding number of GNSS signals and the second repetitive task corresponds to a decoding of the tracked signals, $n''$ is the same or smaller than $n'$. Moreover, from an efficiency perspective, $n'$ and $n''$ should ideally be the same, such that $n = n' = n''$. In this case, the total time $t1$ can be computes as $t1 = t5' + n \cdot t4' + n \cdot t4'' + t5'' = t5' + t5'' + n \cdot (t4' + t4'')$. The above equation can be used to determine an optimum number $n_{max}$ based, for example, on measurements of $t5'$, $t5''$, $t4'$ and $t4''$ taken in a previous epoch of the GNSS receiver.

Alternatively, a cut-off time $C$ between the second time period $t3'$ and the third time period $t3''$ may be determined by the scheduling or positioning algorithm. Then, the number of repetitions $n'$ and $n''$ can be determined independently of each other as detailed above with respect to Figures 2 and 3 respectively.

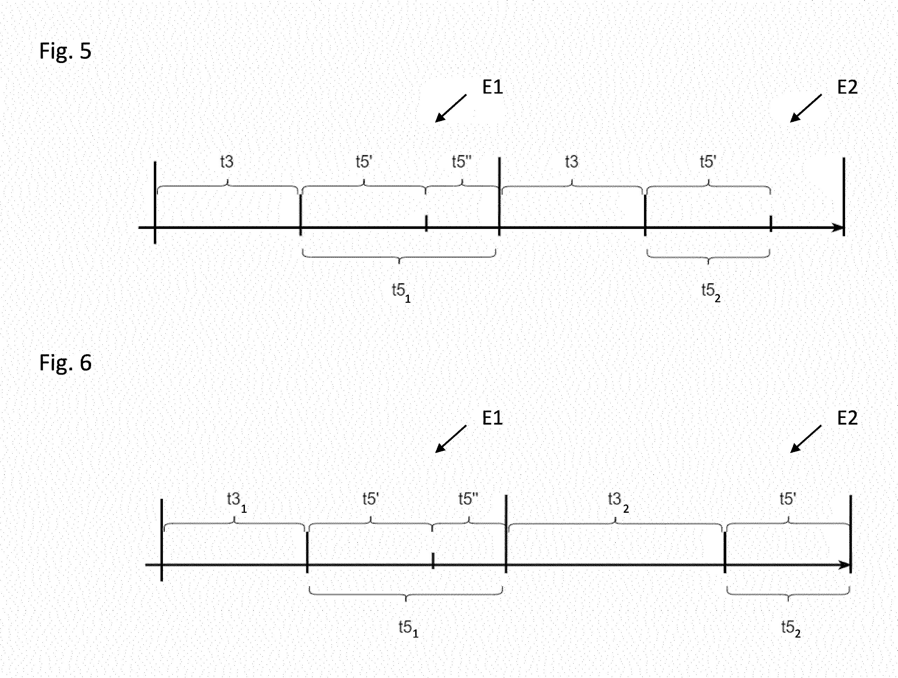

Figures 5 and 6 show timing diagram covering several epochs of a GNSS receiver performing a method for resource management according to different embodiments of the present disclosure. In this context, attention is drawn to the fact that, while the amount of processing time t5 it takes to perform one or more non-repetitive tasks in each epoch generally does not depend on the number n of repetitions of performing repetitive the one or more repetitive tasks, the time period $t5$ may still vary from one epoch to the next.

In particular, as shown in Figure 5, during a first epoch E1 two different non-repetitive tasks may be performed in a first sub-interval $t5'$ and a second sub-interval $t5''$ of a second time interval $t5_1$. In a following epoch E2, only the first non-repetitive task corresponding to the first sub-interval $t5'$ is performed and the second, non-repetitive task is not performed at all. Accordingly, the corresponding time period $t5_2$ of the second epoch E2 is shorter than the time period $t5_1$ of the first epoch E1. The second, non-repetitive task performed in $t5''$ may comprise one or more housekeeping tasks of the positioning algorithm that are performed with a fixed frequency, which is independent of, for example larger than, the epoch time $t2$. For example, in a GNSS receiver outputting positioning data with an output rate of 5 Hz, certain tasks may be performed only once per second, i.e., in every fifth epoch. To avoid running out of time in an epoch, in which the additional task is performed, all non-repetitive tasks may be considered for estimating t5 for a worst-case scenario corresponding to second time interval $t5_1$ of the first epoch E1 shown in Figure 5. In other epochs, for the second type of epoch E2 shown in Figure 5, a corresponding part of processing time in the second epoch E2 remains unused.

Figure 6 shows a further embodiment of a resource management method. The processing time requirements of the positioning algorithm are essentially the same as described above with respect to Figure 5. However, contrary to the situation shown in Figure 5, in the second epoch E2, the additional time available due to the non-performance of the second non-repetitive task in a second sub-period $t5''$ is used to perform one or more further iterations of the repetitive task in a first time period $t3_2$. Put differently, in the first type of epoch, e.g., in the first epoch E1, only a first number of repetitions $n'$, for example 9 repetitions, are performed. In a first type of epoch, e.g., in the second epoch E2, a second, larger number of repetitions $n''$, for example ten repetitions, may be performed.

Attention is drawn to the fact that the above methods for resource management are applicable to a wide range of GNSS receivers and positioning algorithms. In particular practically all known positioning algorithms comprise an essentially non-repetitive processing part and a repetitive processing part, wherein the CPU power or time consumption for performing repetitive tasks increases monotonously with the number of repetitions, often in a linear manner. Accordingly, the described resource management methods are applicable to many positioning algorithms.

As described earlier, the amount of processing time can be reduced in a straightforward manner by reducing the number of GNSS positioning signals considered. However, in order to also optimize the precision of the generated positioning data, the GNSS signals selected for tracking and decoding should not be chosen at random. Preferably, those GNSS signals likely to add the highest contribution to the precision of the computed positioning data should be chosen. Put differently, those GNSS signals should be discarded or dropped, which have no or only a limited impact on the receiver's performance. This results in sacrificing as little position accuracy as possible while prioritizing the navigation data output rate of the GNSS receiver.

This can be ensured, for example, by prioritizing the list of available GNSS signals. A GNSS signal is, in principle, available, if it is accessible to the GNSS receiver, e.g., visible above the horizon at a high enough angle and transmits within a transmission band supported by the GNSS receiver. Prioritization may be performed, for example, based on a signal strength (e.g., C/N or SNR) or signal error (e.g., signal loss count), as GNSS signals with a higher signal strength have an associated lower error and vice versa. Alternatively, or in addition, prioritization may also be performed based on a dilution of precision (DOP) or geometric dilution of precision (GDOP) value, based on the respective position of the corresponding signals with respect to each other. For example, signals from a set of visible navigation satellites, which are far apart in the sky, provide a better precision of the computed positioning data than those from a set of visible navigation satellites, which are located close together in the sky. In general, a DOP value for the GNSS signals considered should be minimized for prioritization.

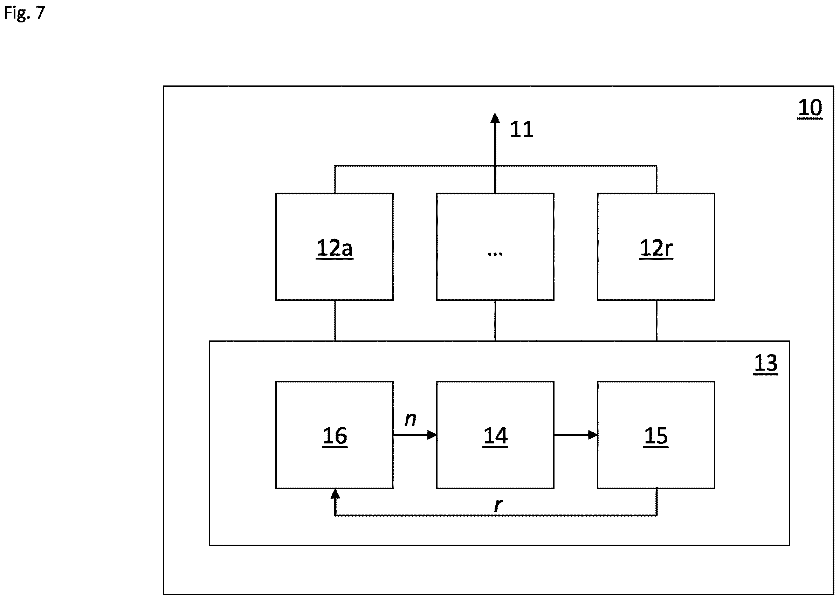

Figure 7 shows, in a schematic manner, a GNSS receiver 10 configured to perform one or more of the scheduling resource management methods according to the previous embodiments.

The GNSS receiver 10 comprises an antenna 11 connected to one or more receiver circuits 12a to 12r which are configured to receive one or more RF signals or signal bands associated with corresponding GNSS satellites or satellite constellations. The GNSS receiver 10 further comprises a processing unit 13, for example a micro-controller or general-purpose CPU, which runs one or more applications or processing blocks, each application or processing block comprising one or more tasks.

In the described embodiment, three different processing blocks are performed by the processing unit 13. A first processing block performs a positioning algorithm 14. A second processing block performs an application 15 that receives positioning data provided by the positioning algorithm 14. A third processing block performs a scheduling or resource management algorithm 16, which may monitor available resources of the processing unit 13 and allocates them to the different processing blocks or applications. In particular, the resource management algorithm 16 may analyze a CPU time budget available for the positioning algorithm 14, before the application 15 expects to receive updated positing data.

Among others, the scheduling component 16 receives a sampling rate r or corresponding epoch time t2 associated with the application 15, which with the application 15 expects to receive the updated positioning data. Such information may be hard-coded, retrieved from a configuration file of the GNSS receiver 10, or communicated via a respective interface between the application 15 and the resource management algorithm 16. Based on the received sampling rate r, the scheduling component 16 determines a number n of repetitions for at least one repetitive task of the positioning algorithm 14 to make sure that the positioning algorithm 14 can provide the application 15 with updated positioning data at the sampling rate r.

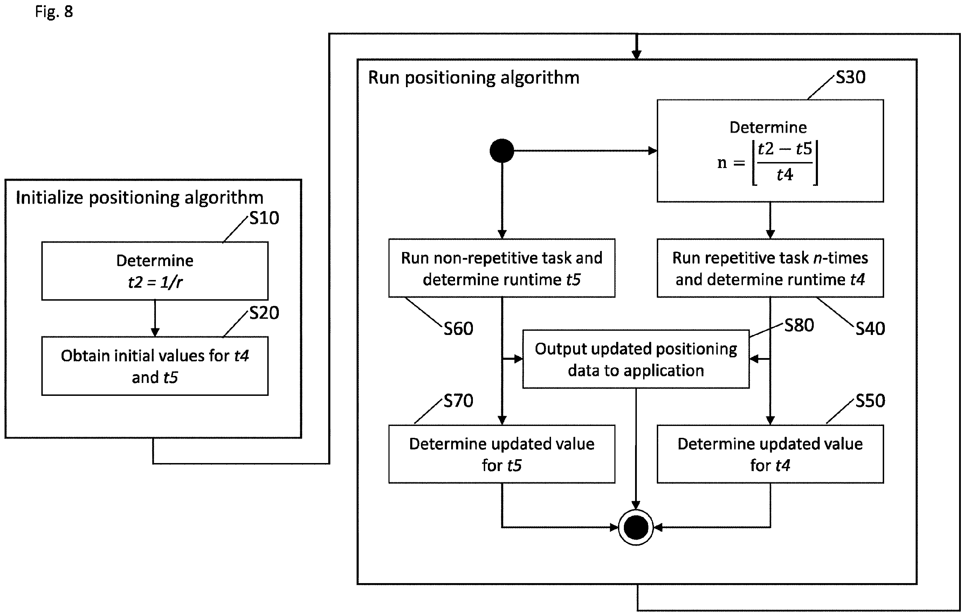

Fig. 8 shows, in form of a block diagram, a specific process for initializing and running the positioning algorithm.

In a step S10, a first time period t2 corresponding to an epoch time is determined, in which the application (15) expects to receive updated positioning data. Specifically, t2 may be computed as $t2 = 1/r$. t2 or r may be received from a respective application or user interface or may be retrieved from a configuration file of the GNSS receiver 10. Alternatively, $t2$ may be measured as time interval at which requests for updated positioning data are received from the application.

In a step S20, some initial values for the timing behavior of the positioning algorithm 14 are obtained. For example, initial values for $t4$ and $t5$ are obtained. The initial values for $t4$ and $t5$ may be hardcoded into the positioning algorithm 14 or retrieved by the scheduling component 16 from a configuration file of the GNSS receiver 10.

After this initial configuration, the actual positioning algorithm 14 is run in a continuous loop and/or re-started at the beginning of each epoch E.

In a step S30, the number n of repetition is determined. For example, n may be computed as

$$n = \lfloor (t2 - t5) / t4 \rfloor$$

based on initial values provided during the initialization in steps S10 and S20.

Thereafter, in a step S40, one or more repetitive tasks are performed n-times. For example, n GNSS signals may be tracked and decoded in a corresponding number of iterations of a respective task for each GNSS signal. The positioning algorithm 14 and/or the scheduling component 16 may determine the execution time for this activity, for example, by keeping track of the times each repetition is started and finished.

In a step S50, an updated timing interval for performing the repetitive task is determined. For example, based on a statistical analysis of the run-times of each previous execution time of the repetitive task, an updated average or maximum value may be determined for $t4$.

In a step S60, one or more non-repetitive tasks are performed. Note that step S60 may be performed prior to and/or after performing steps S30 to S50, as required by the application logic. For example, sensor handling may be performed before step S40, and message generation may be performed after step S40. Alternatively or in addition, it is also possible that all or parts of step S60 may be performed in parallel to any of steps S30 to S50. Again, the positioning algorithm 14 and/or the scheduling component 16 may determine the execution time t5 for this activity, for example, by keeping track of the times each non-repetitive task is started and finished.

In a step S70, an updated timing interval t5 for performing the non-repetitive task is determined. For example, based on a statistical analysis of the run-times of the non-repetitive task in each epoch, an updated average or maximum value may be determined for $t5$.

In a step S80, an updated positing data is output to the application 15 before the current epoch ends. Thereafter, the process continues in step S30 for the next epoch, until the positing algorithm 14 or application 15 is stopped, e.g., by a user.

Depending on the hardware and software configuration of the GNSS receiver 10, the scheduling component 16 may form part of the positioning algorithm 14, i.e., be executed in the same address space, or may be separate components, i.e., be executed in different address spaces. For example, the scheduling component 16 may form part of a protected operating system or resource management layer of a software stack, whereas the positioning algorithm 14 and the application 15 may be run as a normal user task or application.

**Claims**

1. A resource management method for a GNSS receiver (10), comprising

   - determining an epoch (E) for an application (15) of the GNSS receiver (10), wherein the epoch (E) defines a first time period $t2$ in which the application (15) expects to receive positioning data;
   - determining a number $n$ of repetitions for performing one or more repetitive tasks of a positioning algorithm (14) of the GNSS receiver (10); and
   - during each epoch (E), performing the positioning algorithm (14), comprising:

     - performing the one or more repetitive tasks of the positioning algorithm (14) $n$ times, wherein performing the one or more repetitive tasks $n$ times takes a first amount of running time $t3$ that depends on the number $n$ of repetitions;
     - performing one or more non-repetitive tasks of the positioning algorithm (14), wherein performing the one or more non-repetitive tasks takes a second amount of running time $t5$ that does not depend on the number $n$ of repetitions; and
     - outputting updated positioning data to the application (15) based on the output of the one or more repetitive tasks and the one or more non-repetitive tasks of the positioning algorithm (14);

     - wherein the number n of repetitions is determined such that the sum of the first amount of running time $t3$ and the second amount of running time $t5$ is equal to or shorter than the first time period $t2$.

2. The resource management method of claim 1, wherein
   the one or more repetitive tasks are performed in an iterative manner for a maximum of n GNSS signals from a set of available GNSS signals, and the maximum number of $n$ GNSS signals to be considered is based on the difference between the first time period $t2$ and the second amount of running time $t5$.

3. The resource management method of claim 1 or 2, wherein each repetition of the one or more repetitive tasks takes an essentially fixed third amount of running time t4, such that $t3 = n \cdot t4$, and the number n of repetitions is selected from a range [$n_{min}$, $n_{max}$], wherein $n_{min}$ is a predefined minimum number of repetitions, in particular $n_{min} = 4$, and $n_{max}$ is a maximum number of repetitions computed as

$$n_{max} = \left\lfloor \frac{t2 - t5}{t4} \right\rfloor,$$

and $\lfloor \ \rfloor$ is an operation for rounding down to the nearest integer number.

4. The resource management method of claim 3, wherein the number n of repetitions is determined to correspond to the maximum number $n_{max}$ of repetitions.

5. The resource management method of any one of claims 1 to 4, wherein

   - the one or more repetitive tasks comprise at least one of tracking a GNSS signal and decoding transmitted data of a GNSS signal; and/or
   - the one or more non-repetitive tasks comprise at least one of sensor handling or message generation.

6. The resource management method of any one of claims 1 to 5, wherein in each repetition of the one or more repetitive tasks, input data from one entry of an ordered list of potential input data is processed, such that only the first n entries of the ordered list are processed during an epoch (E).

7. The resource management method of claim 6, wherein the list of potential input data is ordered based on at least one of an elevation, a carrier-to-noise density, C/N, a signal-to-noise ratio, SNR, a signal loss count, and a dilution of precision, DOP, of a corresponding GNSS signal.

8. The resource management method of any one of claims 1 to 7, wherein the second amount of running time t5 varies in a pre-determined manner, in particular in that, in a first type of epoch (E1), a first number $N1$ of non-repetitive tasks of the positioning algorithm (14) is performed, and, in a second type of epoch (E2), a second number $N2$ of non-repetitive tasks of the positioning algorithm (14) is performed, with $N1 > N2$, such that the second amount of running time $t5'$ for the first type of epoch is longer than the second amount of running time $t5''$ for the second type of epoch.

9. The resource management method of claim 1 to 8, wherein, after each repetition of one of the one or more repetitive tasks, a current processing time is compared with a cut-off time (C) and, if an expected time period $t4$ for performing a further repetition of the one repetitive task exceeds the difference between the current processing time and the cut-off time (C), the repetitive task is stopped.

10. The resource management method of any one of claims 1 to 9, wherein the number $n$ of repetitions is determined dynamically during a normal operation phase of the GNSS receiver (10), comprising:

    - measuring at least one of the first amount of running time t3, the second amount of running time t5, and a third amount of running time t4 taken by performing one repetition of the one or more repetitive tasks in at least one earlier epoch; and
    - determining the number n of repetitions for a present epoch based on at least one of the measured first amount of running time $t3$, the measured second amount of running time $t5$, the measured third amount of running time $t4$ and a number n of repetitions performed in the at least one earlier epoch.

11. The resource management method of any one of claims 1 to 8, wherein the number n of repetitions is determined statically or semi-statically before or during an initialization of the positioning algorithm (14), respectively, based on a worst-case estimate for the first amount of running time t3 and/or the second amount of running time $t5$ during a normal operation phase of the GNSS receiver (10).

12. The resource management method of any one of claims 1 to 11, wherein, in each epoch,

    - at least one of the one or more repetitive tasks is performed before at least one of the one or more non-repetitive tasks; and/or
    - at least one of the one or more repetitive tasks is performed after at least one of the one or more non-repetitive tasks.

13. A GNSS receiver (10), comprising a processing unit (13), wherein the processing unit (13) is configured to perform the method according to one of claims 1 to 12.

14. The GNSS receiver (10) of claim 13, wherein the positioning algorithm (14) is configured to determine the number n of repetitions based on a current workload of the processing unit (13).

15. The GNSS receiver of claim 13 or 14, wherein the processing unit (13) is further configured to perform the application (15), which is configured to process the positioning data output by the positioning algorithm (14).

## Fig. 1

t2 = 200ms interval

E1   E2   E3   E4   E5

PVT1@205  PVT2@410  PVT3@615  PVT4@820  PVT5@1025
does not fit
into
1000ms/5Hz

5Hz   200   400   600   800   1000  ms

$t1_1$   $t1_2$   $t1_3$   $t1_4$   $t1_5$

## Fig. 2

E

t3  $t1 = t5 + n\ t4$

C

t5   t4 t4 t4 t4 t4 · · · t4

## Fig. 3

$$t1 = t5 + n\,t4$$

E

t3

t4  t4  t4  t4  t4  ...  t4  t5

## Fig. 4

$$t5 = t5' + t5''$$
$$t3' = n'\,t4'$$
$$t3'' = n''\,t4''$$
$$t3 = t3' + t3''$$
$$t1 = t3 + t5$$

E

C

t3'  t3''

t5'  t4'  t4'  t4'  t4'  t4'  ...  t4'  t4''  t4''  t4''  t4''  ...  t4''  t5''

Fig. 5

Fig. 6

Fig. 7

Fig. 8

Initialize positioning algorithm

Determine $t2 = 1/r$ — S10

Obtain initial values for $t4$ and $t5$ — S20

Run positioning algorithm

Determine $n = \left\lfloor \dfrac{|t2 - t5|}{t4} \right\rfloor$ — S30

Run non-repetitive task and determine runtime $t5$ — S60

Run repetitive task $n$-times and determine runtime $t4$ — S40

Output updated positioning data to application — S80

Determine updated value for $t5$ — S70

Determine updated value for $t4$ — S50

Europäisches
Patentamt

European
Patent Office

Office européen
des brevets

# EUROPEAN SEARCH REPORT

**Application Number**

EP 24 18 9983

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/238712 A1 (WENG CHIN-TANG [TW] ET AL) 18 August 2016 (2016-08-18) <br> * claims 1-4; figures 1, 2, 4, 6 * <br> * paragraphs [0006], [0007] * <br> * paragraphs [0019] - [0028] * <br> * paragraphs [0031], [0032] * <br> ----- | 1-15 | INV. <br> G01S19/37 <br><br> ADD. <br> G01S19/42 |
| A | PUSCHNER P ET AL: "CALCULATING THE MAXIMUM EXECUTION TIME OF REAL-TIME PROGRAMS", <br> REAL TIME SYSTEMS, KLUWER ACADEMIC PUBLISHERS, DORDRECHT, NL, <br> vol. 1, no. 2, <br> 1 September 1989 (1989-09-01), pages 159-176, XP000291989, <br> ISSN: 0922-6443, DOI: 10.1007/BF00571421 <br> * page 160, lines 7-10 * <br> * page 163, lines 26-30 * <br> ----- | 2-4, 9-11,14 | |
| A | US 2010/039316 A1 (GRONEMEYER STEVEN A [US] ET AL) 18 February 2010 (2010-02-18) <br> * figure 11A * <br> * paragraph [0121] * <br> ----- | 5 | **TECHNICAL FIELDS SEARCHED (IPC)** <br><br> G01S <br> H04B |
| A | Furuno: "eRideOPUS 6 Navigation Chip Solution Protocol Specifications SE14-600-009-01", <br> , <br> 6 July 2015 (2015-07-06), pages 1-89, XP093239636, <br> Retrieved from the Internet: <br> URL:https://furuno.box.com/s/x5d0hatgcj5th0wdz9z8uoq090o1rt9v <br> * figures 8.3-8.5 * <br> ----- | 5,8 | G06F |
| A | US 2008/218410 A1 (TESTER DAVID P [GB] ET AL) 11 September 2008 (2008-09-11) <br> * paragraph [0039] * <br> ----- | 6,7 | |

-/--

The present search report has been drawn up for all claims

| Place of search | Date of completion of the search | Examiner |
|---|---|---|
| Munich | 15 January 2025 | Krummenacker, Benoît |

EPO FORM 1503 03.82 (P04C01)

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2013/002479 A1 (PRATT ANTHONY RICHARD [GB] ET AL) 3 January 2013 (2013-01-03) * figure 15 * ----- | 6,7 | |

TECHNICAL FIELDS
SEARCHED    (IPC)

The present search report has been drawn up for all claims

| Place of search | Date of completion of the search | Examiner |
|---|---|---|
| Munich | 15 January 2025 | Krummenacker, Benoît |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

....................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 9983

This annex lists the patent family members relating to the patent documents cited in the above-mentioned European search report.
The members are as contained in the European Patent Office EDP file on
The European Patent Office is in no way liable for these particulars which are merely given for the purpose of information.

15-01-2025

| Patent document cited in search report | Publication date | Patent family member(s) | Publication date |
|---|---|---|---|
| US 2016238712 A1 | 18-08-2016 | CN 105579866 A | 11-05-2016 |
| | | TW 201612547 A | 01-04-2016 |
| | | US 2016238712 A1 | 18-08-2016 |
| | | WO 2016034144 A1 | 10-03-2016 |
| US 2010039316 A1 | 18-02-2010 | CN 102369455 A | 07-03-2012 |
| | | DE 112010002638 T5 | 14-06-2012 |
| | | GB 2480941 A | 07-12-2011 |
| | | KR 20120030342 A | 28-03-2012 |
| | | US 2010039316 A1 | 18-02-2010 |
| | | WO 2010114791 A1 | 07-10-2010 |
| | | WO 2010114796 A1 | 07-10-2010 |
| US 2008218410 A1 | 11-09-2008 | US 7375682 B1 | 20-05-2008 |
| | | US 2008218410 A1 | 11-09-2008 |
| | | WO 2008127324 A2 | 23-10-2008 |
| US 2013002479 A1 | 03-01-2013 | CN 102608634 A | 25-07-2012 |
| | | EP 2474839 A2 | 11-07-2012 |
| | | US 2013002479 A1 | 03-01-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8164519 B1